# EUROPEAN PATENT APPLICATION

(11) **EP 4 481 347 A1**
(43) Date of publication of application: **25.12.2024**
(21) Application number: 24182920.9
(22) Date of filing: 18.06.2024
(51) Int. Cl.: G01L 1/20, G01L 5/1627, G01L 3/14

(54) **SIX DEGREE OF FREEDOM LOAD CELL BODY**

(30) Priority: 19.06.2023 US 202363508961 P; 14.06.2024 US 202418744185
(71) Applicant: Illinois Tool Works Inc., Glenview IL 60025 (US)
(72) Inventor: SLAMA, Matthew David, Glenview, 60025 (US)
(74) Representative: HGF

(57) **Abstract**

A load cell body is configured to be used with a test specimen, the load cell body including a first member, a second member, and a flexure arrangement disposed between the first and second members. The flexure arrangement includes a pair of focused flexure assemblies, each of the focused flexure assemblies having a flexure axial plane. The flexure axial planes intersect at a line, and a midpoint of the line defines an origin of a coordinate system. The test specimen is configured to be positioned so that a center of the test specimen is located at the origin. In another aspect, a machine includes a platform, a cross head and a load cell body. The load cell body is disposed on the platform, and the test specimen is configured to contact the load cell body.

## Description

### BACKGROUND

The discussion below is merely provided for general background information and is not intended to be used as an aid in determining the scope of the claimed subject matter. The present disclosure relates to a transducer, formed as a load cell body equipped with suitable sensors, that transmits and measures linear forces along, and moments about, up to three orthogonal axes. Transducers or load cells for determining forces along and about orthogonal axes are known. Two such load cells are disclosed in commonly owned U.S. Patents 4,640,138 and 4,821,582, which are hereby incorporated by reference.

U.S. Patent 4,640,138 illustrates a multiple axis load-sensitive transducer having central and surrounding members that are joined by a pair of axially spaced arms. The arms are integral with the central member and are connected to the outer member by flexible straps, wherein the ends of the straps fixed to the outer member. Each arm is fixed to a center of an associated strap. Loads are sensed as a function of bending on the arms.

U.S. Patent No. 4,821,582 illustrates a load transducer that measures linear forces in three axes and moments about two of the axes. The transducer has inner and outer structures connected by load sensitive arms or shear beams. The outer ends of the arms are connected to outer links that are stiff when the inner structure is loaded in a direction along an axis perpendicular to the plane of the arm.

### SUMMARY

In one aspect, a load cell body is configured to be used with a test specimen, the load cell body comprising a first member, a second member, and a flexure arrangement disposed between the first member and the second member. The flexure arrangement comprises a pair of focused flexure assemblies, each of the focused flexure assemblies having a flexure axial plane. The flexure axial planes intersect at a line, and a midpoint of the line defines an origin of a coordinate system. The test specimen is configured to be positioned so that a center of the test specimen is located at the origin.

In another aspect, a machine is configured to be used with a test specimen. The machine comprises a platform, a cross head and a load cell body. The test specimen is configured to be received between the platform and the cross head. The load cell body disposed on the platform, and the test specimen is configured to contact the load cell body. The load cell body comprises a pair of focused flexure assemblies, each of the focused flexure assemblies having a flexure axial plane. The flexure axial planes intersect at a line; a midpoint of the line defines an origin of a coordinate system. The test specimen is configured to be positioned so that a center of the test specimen is located at the origin.

This summary is provided to introduce concepts in simplified form that are further described below in the Detailed Description. This summary is not intended to identify key features or essential features of the disclosed or claimed subject matter and is not intended to describe each disclosed embodiment or every implementation of the disclosed or claimed subject matter. Specifically, features disclosed herein with respect to one embodiment may be equally applicable to another. Further, this summary is not intended to be used as an aid in determining the scope of the claimed subject matter. Many other novel advantages, features, and relationships will become apparent as this description proceeds. The figures and the description that follow more particularly exemplify illustrative embodiments.

### BRIEF DESCRIPTION OF THE DRAWINGS

The disclosed subject matter will be further explained with reference to the attached figures, wherein like structure or system elements are referred to by like reference numerals throughout the several views. All descriptions are applicable to like and analogous structures throughout the several embodiments, unless otherwise specified.
FIG. 1 is a perspective view of an exemplary multiaxial elastomer test system with a load transducer cell and bushing test specimen mounted thereon.
FIG. 2 is a perspective view of the bushing test specimen showing a typical orientation in the test system.
FIG. 3 is a front right perspective view of an exemplary load cell.
FIG. 4 is an end perspective view of an exemplary load cell showing the orientation of its focused flexure arms.
FIG. 5 is a front elevation view of the exemplary load cell.
FIG. 6 is an enlarged portion of FIG. 3, wherein exemplary sensors are labeled on the load cell body.
FIG. 7 is perspective cross-sectional view taken along line 7-7 of FIG. 3.
FIG. 8 is a cross-sectional perspective view taken along line 8-8 of FIG. 3.
FIG. 9 shows a typical strain gauge bridge circuit used for sensing loads, the gauges of which are selected in relation to the columns or beams relevant for a particular desired measurement of force and moments.

While the above-identified figures set forth one or more embodiments of a load transducer, other embodiments are also contemplated. This disclosure presents the disclosed subject matter by way of representation and not limitation. It should be understood that numerous other modifications and embodiments can be devised by those skilled in the art that fall within the scope of the principles of this disclosure.

The figures may not be drawn to scale. In particular, some features may be enlarged relative to other features for clarity. Moreover, where terms such as above, below, over, under, top, bottom, side, right, left, vertical, horizontal, etc., are used, it is to be understood that they are used only for ease of understanding the description. It is contemplated that structures may be oriented otherwise.

The terminology used herein is for the purpose of describing embodiments, and the terminology is not intended to be limiting. Unless indicated otherwise, ordinal numbers (e.g., first, second, third, etc.) are used to distinguish or identify different elements or steps in a group of elements or steps and do not supply a serial or numerical limitation on the elements or steps of the embodiments thereof. For example, "first," "second," and "third" elements or steps need not necessarily appear in that order, and the embodiments thereof need not necessarily be limited to three elements or steps. Unless indicated otherwise, any labels such as "left," "right," "front," "back," "top," "bottom," "forward," "reverse," "clockwise," "counter clockwise," "up," "down," or other similar terms such as "upper," "lower," "aft," "fore," "vertical," "horizontal," "proximal," "distal," "intermediate" and the like are used for convenience and are not intended to imply, for example, any particular fixed location, orientation, or direction. Instead, such labels are used to reflect, for example, relative location, orientation, or directions. The singular forms of "a," "an," and "the" include plural references unless the context clearly dictates otherwise.

### DETAILED DESCRIPTION

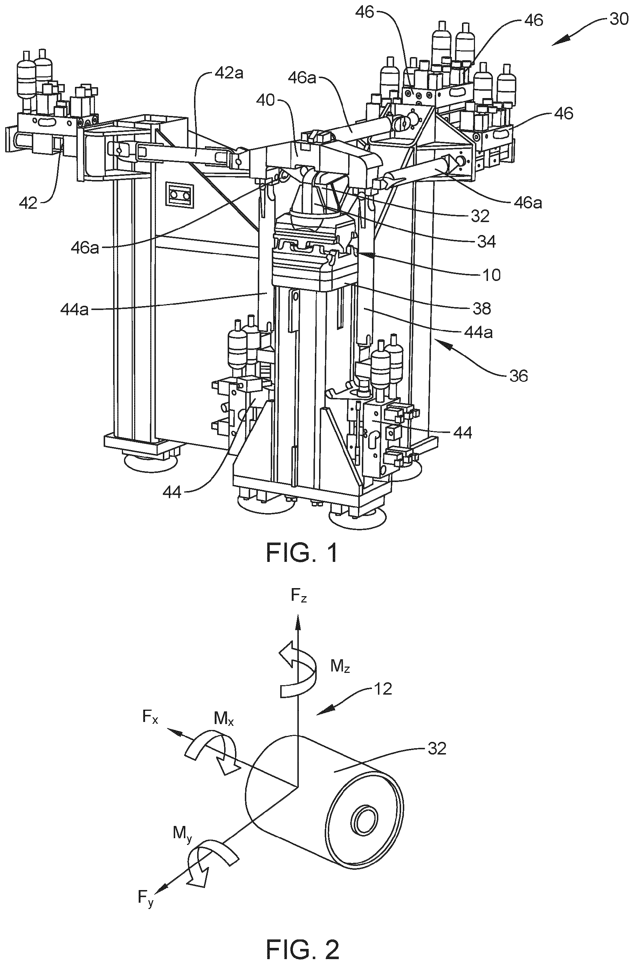

FIG. 1 is a front perspective view of an exemplary test system 30 including a disclosed load cell 10 to detect forces imparted upon a test specimen 32 held in a fixture 34. A suitable machine 36 for use in test system 30 is a Model 836 Multi-axial Elastomer Test System commercially available from MTS Systems of Eden Prairie, Minnesota. However, it is to be understood that other test machines can also be used in system 30. The illustrated MTS Model 836 test machine 36 is designed to provide durability tests for elastomer test specimens 32 and operate in six full degrees of freedom. The MTS Model 83 includes sensors at each of the actuators 42, 44, 46.

While the illustrated test specimen 32 is configured as a suspension bushing, it is to be understood that a test machine 36 with a disclosed load cell 10 can also be used for other components, without limitation, including elastomer parts. Test machine 36 and load cell 10 are configured to withstand a high load capacity and wide frequency band for meeting a broad range of test requirements, including elastomer parts for vehicle ride and handling applications. In the illustrated system 30, using a load cell 10 in addition to or in place of the sensors at the actuators can yield optimized results as further described herein.

FIG. 2 shows a typical orientation of a test specimen 32 as it would be oriented in the machine 36; a coordinate system 12 is presented to illustrate the directions of linear Forces (Fx, F_{y}, F_{z}) and rotational Moments (M_{X}, M_{y}, M_{z}) that are detected by the disclosed load cell 10. An exemplary test system 30 uses test machine 36 with a disclosed load cell 10 for testing specimen 32, which may or may not be provided with an adapter or fixture 34. The fixture 34 holds test specimen 32 in a proper orientation with respect to load cell 10. The load cell 10, fixture 34 and test specimen 32 are disposed between platform 38 and cross head 40. In this disclosure, forces and moments are measured with respect to a stationary orthogonal coordinate system 12 including mutually orthogonal X, Y and Z axes.

In an exemplary system 30, forces are imparted to the specimen 32 by a plurality of actuators; these forces are detected by the load cell 10. In the illustrated machine 36, a single actuator 42, through strut 42a, imparts forces in the reciprocal (back and forth) Fx directions. In an exemplary embodiment, two actuators 44 (through struts 44a) impart forces in the reciprocal Fz directions. And in an exemplary embodiment of machine 36, three actuators 46 (through struts 46a) impart forces in the reciprocal F_{Y} directions (located at the center and each end of cross head 40).

A controller of test machine 36 is capable of commanding each actuator 42, 44, 46 individually. Thus, for example, if the two Z actuators 44 move the left and right parts of cross head 40 differentially, a moment about Y (M_{Y}) may be imparted on test specimen 32. If the three Y actuators 46 move the left, right or top parts of cross head 40 differentially, a moment about Z (Mz) and/or a moment about X (Mx) may be imparted on test specimen 32.

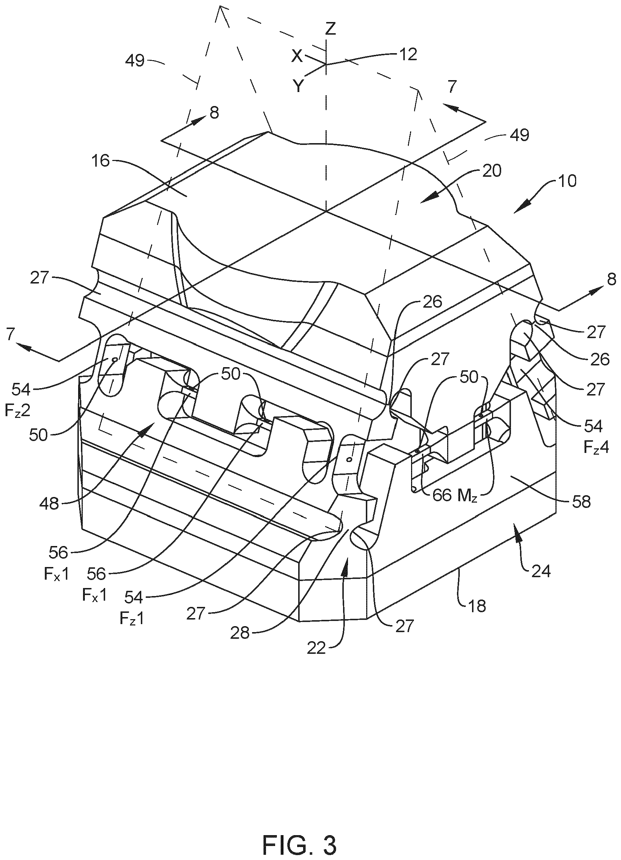

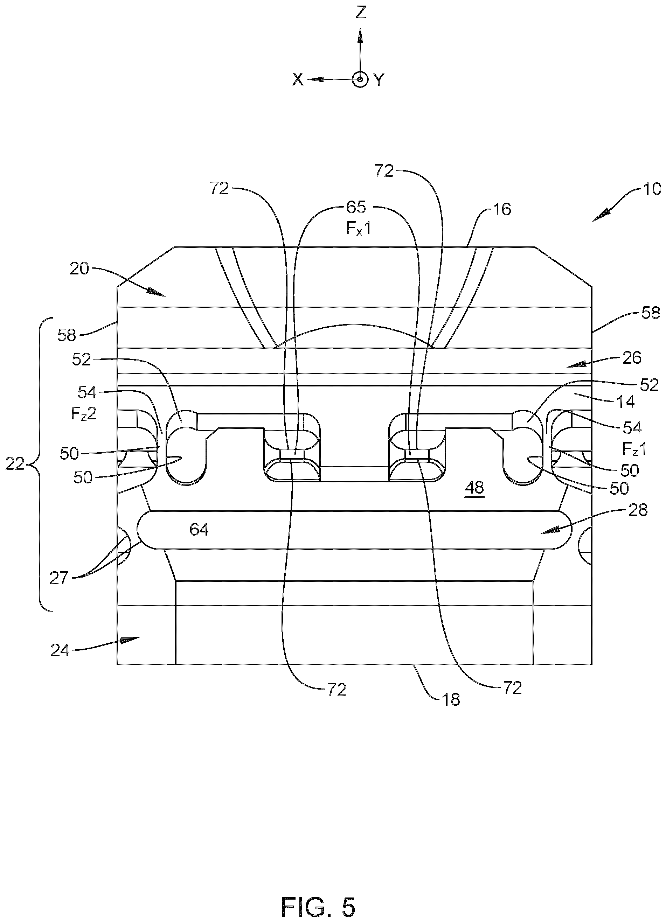

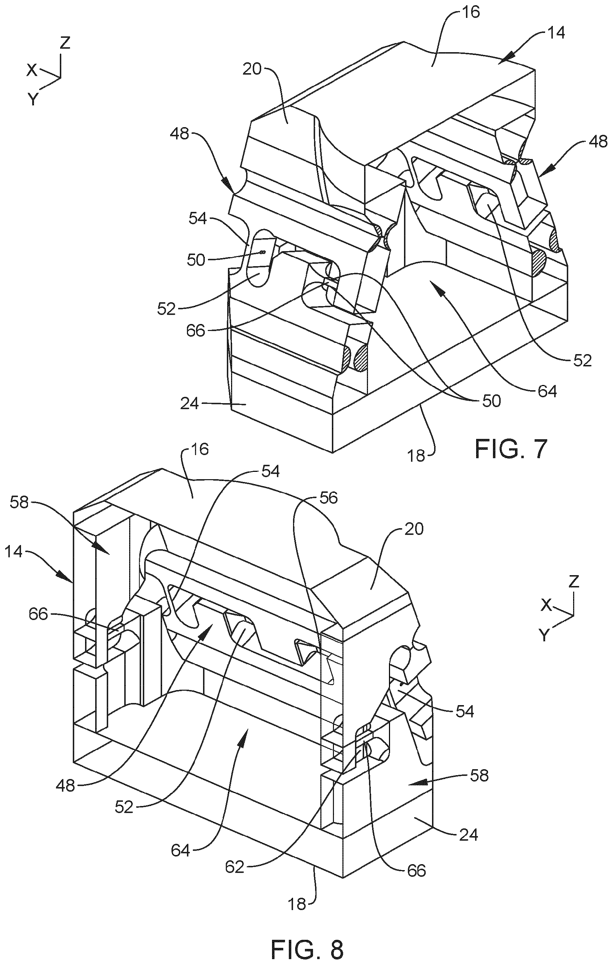

FIGS. 3-8 show various views of an exemplary load cell 10 suitable for use in system 30. In an exemplary embodiment, load cell 10 comprises an integral body 14 preferably formed from a solid block or mass of material. Suitable materials include ductile metals such as steel or titanium, for example. Machining unitary body 14 from a single piece of material reduces hysteresis in operation, improves repeatability, and provides adequate low force responses. A one-piece machined construction of body 14 also increases durability by eliminating welding, brazing, adhesives and bolted joints. The integrally machined body 14 permits a small package size that provides high stiffness in all directions.

A monolithic structure of body 14 removes the creep, hysteresis, and damping from bolted joints. These effects are removed by stiff machined joints that have very little slippage. Moreover, the focused flexure assemblies 48 remove the large overturning moment from F_{Y} that couples into the Mx measurement. This allows a very sensitive measurement in Mx. With this, the output is able to be five times what could be achieved with a traditional method. Furthermore, because of the compact and stiff design of load cell 10 with minimal series paths, the load cell is able to have a high natural frequency, which eliminates dynamic errors in the force and moment measurements. The amalgamation of stiffness and parasitic loading tuning allow the combined load errors over the whole calibration space to be minimized.

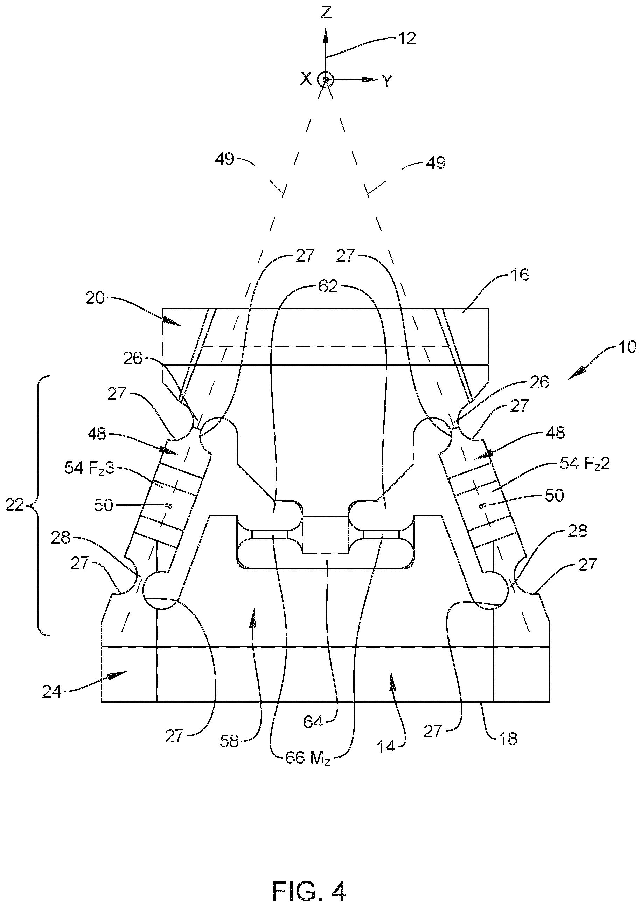

As shown in FIGS. 3 and 4, in an exemplary embodiment, the two axial planes 49 of the focused flexure assemblies 48 intersect in a line. The midpoint of that line defines a center or origin of the control coordinate system 12. The origin of the coordinate system 12 is also directly above (in the Z direction) a center of the body 14 in the X-Y plane. In the testing system 30, the center of the test specimen 32 would be placed at this focus point origin by a fixture or adapter 34. Thus, while coordinate system 12 is depicted on many of the drawing figures to show the orientation of the illustrated structures, its origin is placed correctly at the center of specimen 32, positioned at the intersection of the planes of flexure axes 49 of focused flexure assemblies 48, as shown in FIGS. 2 - 4.

In an exemplary embodiment of transducer or load cell 10, body 14 is equipped with a plurality of sensors 50. In an exemplary embodiment, transducer 10 provides six measurements including moments and axial measurements in the three principal axes (X, Y and Z) with very low cross talk or likelihood of affecting the reading in one axis with loads in another axis; this results from the isolation features obtained by using flexure bending beams for the supports for the connected load carrying members.

In an exemplary embodiment, body 14 is configured in the form of a frame or cage having a cavity 64 within the bounds of first member 20, second member 24, two opposed focused flexure assemblies 48 and two opposed end wall flexure assemblies 58. In an exemplary embodiment, components 20, 24, 48, 58 are integral with each other and are formed from a single unitary body. However, in another embodiment, components 20, 24, 48, 58 or portions thereof could be manufactured as separate elements.

In an exemplary embodiment, as shown in FIGS. 3-8, a first member 20 is connected via a flexure arrangement 22 to a second member 24. In an exemplary embodiment, each of the first and second members 20, 24 includes a substantially planar loading surface 16, 18, respectively. In an application of the load cell 10, forces transmitted between the connected components via loading surfaces 16, 18 are sensed and measured by the sensors 50 located on the flexure arrangement 22 of transducer body 14.

When equipped with suitable sensing devices 50, the load cell 10 can sense forces and moments in up to six degrees of freedom. In a suitable implementation, the second member 24 is grounded or otherwise is fixed relative to the set of axes 12 while the first member 20 moves relative to the second member 24, being supported on the second member 24 by the flexure arrangement 22. This is but one implementation and if desired, the first member 20 can be fixed relative to the set of axes 12 while the second member 24 moves relative thereto.

In an exemplary embodiment, flexure arrangement 22 includes two opposed focused flexure assemblies 48 and two opposed end wall flexure assemblies 58. In an exemplary embodiment of focused flexure assembly 48, two upper hinges 26 and two lower hinges 28 extending along the length of body 14 (parallel to the x-axis). In an exemplary embodiment, each of the linear hinges 26, 28 is configured as a thinned-out portion of the body 14 between two curved, machined grooves 27. In an exemplary embodiment, each of grooves 27 is radiused symmetrically about the axial plane 49 of focused flexure assembly 48. This creates an even strain flow through the flexure ends, resulting in a more stable constant center of the flexure assemblies 48. Thus, the flexure assemblies 48 react to load without nonlinear effects and thus eliminate nonlinear crosstalk from their measurements.

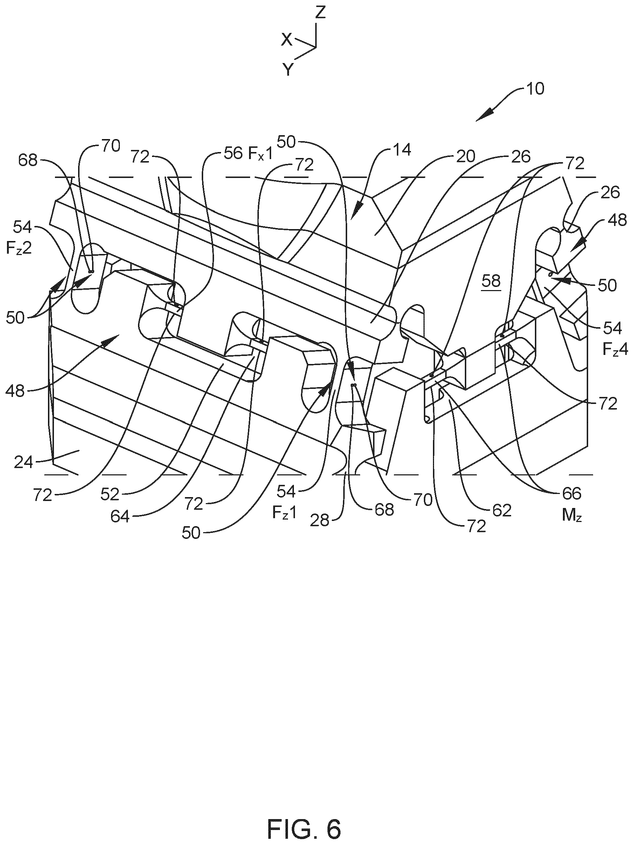

In an exemplary embodiment as shown in FIG. 6, each focused flexure assembly 48 includes aperture 52 extending there-through, leading to cavity 64. In an exemplary embodiment, each focused flexure assembly 48 includes a pair of columns 54 and a pair of beams 56. In an exemplary embodiment, each end wall flexure assembly 58 includes an aperture 62 including beams 66. The columns and beams 54, 56, 66 are labeled with the principle forces that sensors 50 thereon are designed to measure, as further described below.

The load cell 10, having transducer body 14 with sensors 50 thereon, allows for characterizing the performance of an elastomer test specimen 32 such as a bushing across a wide frequency range by measuring forces and moments with high and low frequencies. It also provides transducer outputs for acceleration compensation. It is able to measure forces and moments with high fidelity and low noise at a large offset while maintaining high natural frequency through use of focused flexure assemblies 48. With this structure, the focused flexure assemblies 48 have stiff load paths with high sensitivity to provide low noise measurement signals, with a wide dynamic range.

Sensors 50 can be based on strain measurement and/or could be piezoelectric transducers, for example. Some measurement outputs would be the fatigue or wear properties of the elastomeric test specimen 32, as well as the frequency content and transmissibility of the elastomer in six degrees of freedom.

The environment of test system 30 can be quite harsh, including high loads and large moment arms relative to the size of load cell 10. In load cell 10, thermal loads from the specimen 32 as high frequency, dynamic loads are damped. Even in challenging environmental conditions, load cell 10 maintains thermal stability, high natural frequency, high output, low noise, longevity, low cross talk, and low static measurement errors. In an exemplary embodiment, transducer body 14 is formed of steel, chosen for its endurance limit. If the stress applied is below this limit, the body will have a useful life without a calculable end, with regard to fatigue. Utilizing steel also increases the modulus of elasticity over other materials and provides for space-efficient stiff beams while promoting low parasitic loading.

In an exemplary embodiment, load cell 10 measures six degrees of freedom by isolation of loads. In general overview, load cell 10 includes a pair of focused flexure assemblies 48 that have sets of columns and beams and 54, 56 carrying sensors 50 thereon. The focused flexure assemblies 48 take up the forces that are applied at a focus point above the load cell 10. By separating out the degrees of freedom along the coordinate system, measurement performance can be increased for the natural frequency, with lower noise, higher output, lower static measurement error, and lower thermal errors. Loads in F_{X}, F_{Y}, F_{Z}, M_{Y} and partially M_{Z} are shunted through the focused flexure assemblies 48 so that the columns 54 can measure F_{Y}, F_{Z}, and M_{Y}. This provides sensor output of M_{X} that is free from the overturning moment from the F_{Y} load times the height above the load cell center coordinate system. Without this feature, the Mx measurement at the bushing coordinate system would be lost in the noise.

In an exemplary embodiment, each focused flexure assembly 48 includes two "Push-Pull" (PP) beams 56 and two "Axial-Poisson" (P/A) columns 54. The two PP beams 56 on a single focused flexure assembly 48 are considered to be a set. The PP beam set creates a signal by having one of the beams 56 react in compression and the other PP beam 56 react in tension. Sensors 50 such as strain gauges 72 placed on these beams 56 therefore undergo compressive and tensile strain. This creates a change in resistance and creates a signal output in the Wheatstone bridge.

The set of PP beams 56 measures Fx and Mz by providing a stiff load path along the X-axis. Because the two sets of PP beams 56 are offset (along the y-axis) on the two focused flexure assemblies 48 positioned on opposite sides of the transducer body 14, they react to the moment Mz. These PP beams 56 are compliant in the other four degrees of freedom by utilizing the lateral compliance from a bending beam. Increasing the length of these PP beams 56 decreases the orthogonal stiffness by the cubic power of length. However, the axial stiffness is a function of just cross-sectional area divided by the length; a high stiffness axially can be achieved while maintaining low orthogonal stiffness. This produces a high natural frequency along the length of the beam 56, yet low parasitic loading to the other degrees of freedom, thereby reducing the thermal drift and stresses induced by the other degrees of freedom.

Another set of PP beams 66 is located in end wall flexure assembly 58. These PP beams 66 take the same form of "Push-Pull" beam, having high axial stiffness and low orthogonal stiffness. Therefore, they provide a path for F_{Y}, M_{X} and M_{Z} loads. However, due to the high stiffness of the focused flexure assemblies 48 in the Y direction, the majority of the Fy load is shunted through the focused flexure assemblies 48, and this set of beams 66 is isolated from the F_{Y} loading. However, because the main body flexure assemblies 48 do not have rotational stiffness about X (in large part due to the hinges 26, 28), the Mx load is passed through the beams 66. These beams 66 are not rotationally stiff but are axially stiff. Moreover, they are located below (in the Z direction) the origin of the measurement coordinate system 12 (located above the load cell 10 as shown in FIG. 4), thereby allowing the beams 66 to react the moment with an axial load. Furthermore, the two sets of beams 66 on opposite end wall flexure assemblies 58 are offset in the X direction; therefore, they carry load from the moment M_{Z}. The height of these beams 66 helps drive down crosstalk from Mz and increases Mx output.

The two sets of PP beams 66 each take up the Mz load. The Mz load can be quite large relative to the measurements that these PP beams 66 are taking. In this configuration, the beams are able to share the Mz load between them, proportional to their relative stiffness. This allows for the Fx and Mx outputs to be relatively high in sensitivity compared to the expectation.

In an exemplary embodiment, two sets of PP beams 56 are located on the focused flexure assemblies 48 and another two sets of the PP beams 66 are located on end wall flexure assemblies 58. In an exemplary embodiment, each of PP beams 56 and 66 has a strain gauge 72 positioned on each of its top and bottom surfaces. These four sets of PP beams 56, 66 result in four bridge outputs that are summed and differenced to measure Mz output. It is possible to just take the output from two sets of the PP beams; however, this might result in a thermal drift problem because there is a parallel path for the internal force loops to take when the ends of the load cell 10 experience thermal warpage. Thus, by taking all four of the bridge outputs and assigning the proper gains, these internal force loops can be cancelled out to create stability.

The two opposed focused flexure assemblies 48 carry four P/A columns 54 that take up load in the direction of a respective column's axis 49, due to the columns' high axial stiffness and compliance in the other degrees of freedom. P/A columns 54 are wide compared to PP beams 56, 66 so that the P/A columns 54 take up stiffness in a direction of load that is orthogonal to the axial direction 49 of the column 54 and also orthogonal to the X direction, so that the focused flexure assemblies 48 do not buckle under load and create non-linearity or generate a low mode of resonance. The P/A column 54 undergo axial strains that are measured by axial and Poisson gauges.

As labeled in FIG. 6, in an exemplary embodiment, sensor 50 of column 54 includes axial gauge 68 placed in the direction of the axial strain and Poisson gauge 70 placed orthogonally to the axis of column 54, to measure the Poisson's strain from the material, which is due to maintaining a constant volume under deformation proportional to the sensor material's Poisson's ratio. The axial strain exceeds the Poisson's strain by Poisson's ratio of the material that is used for the sensor body 14. By taking all of the outputs from the P/A columns 54 and summing them, the Fz force is able to be measured. The bridges forward to back in the X direction are differenced to get M_{Y}. The bridges side to side in the Y direction are differenced to get F_{Y}. All of these outputs are then taken and run through either amplifiers or some signal condition and passed through a transform function to convert them into engineering units.

In an exemplary embodiment, load cell 10 utilizes a set of eight Wheatstone bridges. These bridges are then summed and differenced to generate output for a calibration function to convert to engineering units. In an exemplary embodiment, each set of two PP beams 56 has four gauges 72, forming a bridge; thus, the two sets of PP beams 56 on the two focused flexure assemblies 48 therefore form two bridges. In an exemplary embodiment, each set of two PP beams 66 has four gauges 72, forming a bridge; thus, the two sets of PP beams 66 on the two end wall flexure assemblies 58 therefore form another two bridges. In an exemplary embodiment, each P/A column 54 has two axial gauges 68 and two Poisson gauges 70, forming a bridge; thus, the four P/A columns 54 on the two focused flexure assemblies 48 therefore form another four bridges.

When the load applied is asymmetrical upon loading surface 16 relative to loading surface 18, the acceleration of the active portion of the load cell 10 will be measured. An algorithm is used to correct for the resonance of the measurement system to remove those errors from the load measurement. Additional details regarding computations used with load transducers are provided in the following commonly owned U.S. Patents, which are hereby incorporated by reference: U.S. Patent 4,640,138 entitled "Multiple Axis Load Sensitive Transducer;" U.S. Patent 4,821,582, entitled "Load Transducer;" and U.S. Patent 10,545,062, entitled "Multi Axis Load Cell Body."

It should be noted that the shapes of the columns 54 and beams 56, 66 can take a number of different forms when viewed in cross-section. For instance, the columns can be of constant area in cross-section, or the columns can be tapered as illustrated, which reduces the stress gradient through the column or beam induced by bending from off-axis load and end effects. Also, the load-carrying capabilities of the columns and beams can be adjusted depending upon the forces to be measured.

In an exemplary embodiment of transducer body 14, temperature control features can be provided on one or both of first member 20 and second member 24. In an exemplary embodiment, one or more of members 20, 24 includes channels through which coolant fluid, such as water for example, is pumped. Thus, the temperature controlling members 20, 24 on the top and bottom of the load cell 10 provide high fidelity control of the load cell temperature so that there is thermal equilibrium between the first and second members 20, 24. By eliminating a thermal gradient through the load cell 10, there will be no thermal error. In contrast, when a thermal gradient through the load cell exists, there will be a strain condition on the beams and columns that results in an offset that changes with load due to thermal warpage.

In the disclosed load cell 10, all of the degree of freedom bridges are isolated from each other by reducing the orthogonal stiffness of each of the beams and columns such that parasitic loading is mostly removed. The end of each of the beams and columns is designed with sufficient cantilever stiffness to ensure that the beams and columns go through double cantilever bending and not mere cantilever bending, so that there exists a definitive inflection point in the beam rather than some changing center that would otherwise exist in a cantilever beam. Thus, the disclosed structure creates very low crosstalk in a load cell 10 that has high orthogonal outputs and thus a very stable load measurement capability.

Load cell 10 performs both in the AC and the DC components of load. Load cell 10 measures low frequency, quasistatic loads, while maintaining the high natural frequency to measure the dynamic loads. The geometry of transducer body 14 allows a high level of flexure isolation and tuned beam and column locations to provide for low crosstalk, low thermal error, and low noise in the measurement device.

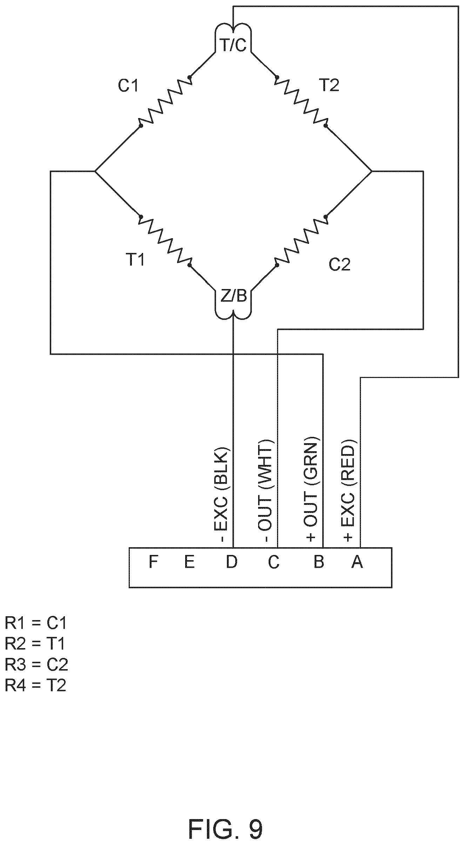

FIG. 9 shows a typical strain gauge bridge circuit used for sensing loads, the gauges of which are selected in relation to the columns or beams relevant for a particular desired measurement of force and moments. "C" denotes a compression gauge and "T" denotes a tension gauge. In order to obtain the signals that represent the forces acting on the transducer, several strain gauge bridges are formed using the strain gauges in selected bridge arms represented by resistors R1-R4, corresponding respectively to C1, T1, C2 and T2 of FIG. 9. The individual bridge outputs will provide signals that indicate the various forces, from which the moments about two of the coordinate axes can be determined (such as X and Z for example), and a separate bridge can be used for determining the moment about the remaining axis (such as Y for example).

In an exemplary embodiment, the tension gauges are in opposite arms of the bridge, and the compression gauges are also in opposite arms of the bridge. The unitary (one piece) construction of body 14, on which sensors / gauges 50, 68, 70, 72 are located, including on the focused flexure assemblies 48 and end wall flexure assemblies 58, permit isolating the loads from each other to minimize cross coupling and reduce hysteresis and other problems with operation.

Exemplary, non-limiting embodiments of a load cell 10 comprising body 14 with sensors 50 thereon are described. In an exemplary embodiment, a load cell body 14 is configured to be used with a test specimen 32, and the load cell body 14 comprises a first member 20, a second member 24 and a flexure arrangement 22 disposed between the first member 20 and the second member 24. In an exemplary embodiment, the flexure arrangement 22 comprises a pair of focused flexure assemblies 48, each of the focused flexure assemblies 48 having a flexure axis 49, wherein the flexure axial planes 49 of the pair of focused flexure assemblies 48 intersect in a focal line, and wherein a midpoint of the line defines an origin of a coordinate system 12. In an exemplary embodiment, the test specimen 32 is configured to be positioned so that a center of the test specimen 32 is located at the origin.

In an exemplary embodiment, the coordinate system 12 includes mutually orthogonal X, Y and Z axes, and at least one of the focused flexure assemblies 48 comprises a hinge 26, 28 extending parallel to the X axis. In an exemplary embodiment, at least one of the focused flexure assemblies 48 comprises a first column 54 extending parallel to the flexure axis 48 and a first beam 56 extending parallel to the X axis. In an exemplary embodiment, a sensor 50 is disposed on at least one of the first column 54 and the first beam 56. In an exemplary embodiment, the sensor 50 comprises a strain gauge 72 disposed on the first beam 56. In an exemplary embodiment, the sensor 50 comprises an axial gauge 68 disposed on the first column 54 and aligned with the flexure axis 49. In an exemplary embodiment, the sensor 50 comprises a Poisson gauge 70 disposed on the first column 54 and orthogonal to the axial gauge 68.

In an exemplary embodiment, the flexure arrangement 22 comprises a pair of end wall flexure assemblies 58, each of the end wall flexure assemblies 58 positioned at an end of the pair of focused flexure assemblies 48. In an exemplary embodiment, at least one of the end wall flexure assemblies 58 comprises a first beam 66 extending parallel to the Y axis. In an exemplary embodiment, a sensor 50 is disposed on the first beam 66. In an exemplary embodiment, the sensor 50 comprises a pair of strain gauges 72 disposed on two opposed sides the first beam 66.

In an exemplary embodiment, the flexure arrangement 22 comprises at least two pairs of support columns 54 and four pairs of beams 56, 66. In an exemplary embodiment, each of the support columns 54 extends parallel to a flexure axis 49. In an exemplary embodiment, each of the beams 56, 66 extends parallel to the X axis or parallel to the Y axis. In an exemplary embodiment, two opposed pairs 56, 66 of the four pairs of beams are disposed at equal distances from the origin of the coordinate system 12. In an exemplary embodiment, the two opposed pairs of beams 56 are located on the pair of focused flexure assemblies 48. In an exemplary embodiment, the two opposed pairs of beams 66 are located on the pair of end wall flexure assemblies 58. In an exemplary embodiment, the first member 20, the second member 24 and the flexure arrangement 22 are integrally formed of a single unitary mass comprising an internal cavity 64.

Although the subject matter has been described in language specific to structural features and/or methodological acts, it is to be understood that the subject matter defined in the appended claims is not necessarily limited to the specific features or acts described above as has been determined by the courts. Rather, the specific features and acts described above are disclosed as example forms of implementing the claims. In addition, any feature disclosed with respect to one embodiment may be included in another embodiment, and vice-versa. All references mentioned in this disclosure are hereby incorporated by reference.

## Claims

1. A load cell body configured to be used with a test specimen, the load cell body comprising:
a first member;
a second member; and
a flexure arrangement disposed between the first member and the second member, the flexure arrangement comprising:
a pair of focused flexure assemblies, each of the focused flexure assemblies having a flexure axial plane, wherein the flexure axial planes intersect at a line, and wherein a midpoint of the line defines an origin of a coordinate system, and wherein the test specimen is configured to be positioned so that a center of the test specimen is located at the origin.

2. The load cell body of claim 1, wherein the coordinate system includes mutually orthogonal X, Y and Z axes, and wherein at least one of the focused flexure assemblies comprises a hinge extending parallel to the X axis.

3. The load cell body of claim 1, wherein the coordinate system includes mutually orthogonal X, Y and Z axes, and wherein at least one of the focused flexure assemblies comprises a first column extending parallel to the flexure axial plane and a first beam extending parallel to the X axis.

4. The load cell body of claim 3, comprising a sensor disposed on at least one of the first column and the first beam, the sensor preferably comprising a strain gauge disposed on the first beam, and optionally comprising an axial gauge disposed on the first column and aligned parallel to the flexure axial plane or a Poisson gauge disposed on the first column and orthogonal to the flexure axial plane.

5. The load cell body of any one of claims 1-4, wherein the flexure arrangement comprises a pair of flexure end wall assemblies, each of the flexure end wall assemblies positioned at an end of the pair of focused flexures assemblies, and preferably wherein the coordinate system includes mutually orthogonal X, Y and Z axes, and wherein at least one of the flexure end wall assemblies comprises a first beam extending parallel to the Y axis.

6. The load cell body of claim 4, comprising a sensor disposed on the first beam, and preferably wherein the sensor comprises a pair of strain gauges disposed on two opposed sides the first beam.

7. The load cell body of any one of claims 1-6, wherein the coordinate system includes mutually orthogonal X, Y and Z axes, and wherein the flexure arrangement comprises at least:
two pairs of support columns, each of the support columns extending parallel to a respective flexure axial plane; and
four pairs of beams, each of the beams extending parallel to the X axis or parallel to the Y axis.

8. The load cell body of claim 7, wherein two opposed pairs of the four pairs of beams are disposed at equal distances from the origin of the coordinate system, and preferably wherein the two opposed pairs of beams are located on the pair of focused flexure assemblies.

9. The load cell body of claim 8, wherein:
the flexure arrangement comprises a pair of flexure end wall assemblies, each of the flexure end wall assemblies positioned at an end of the pair of focused flexure assemblies; and
the two opposed pairs of beams are located on the pair of flexure end wall assemblies.

10. The load cell body of any one of claims 1-9, wherein the first member, the second member and the flexure arrangement are integrally formed of a single unitary mass comprising an internal cavity.

11. A machine configured to be used with a test specimen, the machine comprising:
a platform and a cross head, wherein the test specimen is configured to be received between the platform and the cross head; and
a load cell body disposed on the platform, wherein the test specimen is configured to contact the load cell body, the load cell body comprising:
a pair of focused flexure assemblies, each of the focused flexure assemblies having a flexure axial plane, wherein the flexure axial planes intersect at a line, and wherein a midpoint of the line defines an origin of a coordinate system, and wherein the test specimen is configured to be positioned so that a center of the test specimen is located at the origin.

12. The machine of claim 11, wherein the coordinate system includes mutually orthogonal X, Y and Z axes, and wherein the machine comprises an actuator configured to impart a force in the X axis to the test specimen.

13. The machine of claim 11, wherein the coordinate system includes mutually orthogonal X, Y and Z axes, and wherein the machine comprises an actuator configured to impart a force in the Y axis to the test specimen.

14. The machine of claim 11, wherein the coordinate system includes mutually orthogonal X, Y and Z axes, and wherein the machine comprises an actuator configured to impart a force in the Z axis to the test specimen.
